# EUROPÄISCHE PATENTSCHRIFT

(11) **EP 2 126 642 B1**
(45) Veröffentlichungstag und Bekanntmachung des Hinweises auf die Patenterteilung: **24.07.2013**
(21) Anmeldenummer: 08707203.9
(22) Anmeldetag: 23.01.2008
(51) Int. Cl.: G05B 19/042, H04L 12/403, H04L 29/12, H04L 12/40

(54) **TEXTILTECHNISCHES BUSSYSTEM**
BUS SYSTEM FOR TECHNICAL TEXTILES
SYSTÈME DE BUS POUR L'INDUSTRIE TEXTILE

(30) Priorität: 01.02.2007 DE 102007005825; 22.06.2007 DE 102007029272
(43) Veröffentlichungstag der Anmeldung: 02.12.2009
(73) Patentinhaber: Memminger-IRO GmbH, 72280 Dornstetten (DE)
(72) Erfinder: KETTERER, Ludwig, 78713 Schramberg (DE)
(74) Vertreter: Frese, Beate
(86) Internationale Anmeldenummer: PCT/EP2008/000486
(87) Internationale Veröffentlichungsnummer: WO 2008/092589

(56) Entgegenhaltungen:
- EP-A- 1 331 533
- EP-A- 1 503 262
- EP-A- 1 519 336
- EP-A- 1 655 645
- WO-A-99/14643

## Beschreibung

Die Erfindung betrifft ein Bussystem für ein textiltechnisches Gerät sowie Verfahren zur Adressierung textiltechnischer Geräte und zur Signalisierung von bestimmten Zuständen.

Zur Verknüpfung textiltechnischer Geräte mit zentralen Steuerungen sind Bussysteme bekannt, wie beispielsweise die WO 99/14643 veranschaulicht. Diese offenbart die Verknüpfung der Geräte mit einem CAN-Bus und einer zusätzlichen Leitung, die als Daisy Chain geschaltet ist. Die Daisy-Chain-Leitung ist in den einzelnen textiltechnischen Geräten jeweils unterbrochen und wird nach und nach durch einen Schalter geschlossen. Dies dient der Initialisierung und Adressenvergabe für die einzelnen Geräte. Empfängt eines der Geräte über die Daisy-Chain-Leitung einen Adressierungsbefehl adressiert es sich und schließt einen Schalter um den Adressierungsbefehl über die Daisy-Chain-Leitung an das in der Kette nachfolgende Gerät zu liefern.

Der Informationsaustausch zwischen Zentrale und peripheren Geräten erfolgt dann über den CAN-Bus.

Die DE 195 45 566 A1 offenbart ein Verfahren zur Datenübertragung zwischen Slave-Geräten d.h. so genannten Teilnehmern eines Bussystems in Form einer Daisy Chain.

Der Datendurchsatz ist bei Daisy Chain Bussystemen beschränkt. Insbesondere wenn es auf sofortige Reaktion der zentralen Steuerung auf ein Ereignis an oder in einem Slave ankommt, kann sich die sich aus der Weiterleitung der Information von Teilnehmer zu Teilnehmer ergebende Verzögerungszeit nachteilig auswirken.

Dazu schlägt die WO 2004/003274 A1 vor, die einzelnen Teilnehmer parallel zueinander an eine Zentralsteuerung anzuschließen und besondere Ereignisse über eine gesonderte Leitung zu melden. Auf dieser besonderen Leitung wird dann das besondere Ereignis, beispielsweise Fadenbruch, in Verbindung mit einer Kennung gesendet, die das sendende Gerät identifiziert.

Die vorgestellten Systeme verlangen eine Adressierung der einzelnen Teilnehmer. Diese Adressierung erfordert bei dem System gemäß WO 99/14643 eine gesonderte Leitung. Es ist aber zu wünschen, dass die Adressierung mit geringem Aufwand und bei möglichst allen denkbaren Szenarien seitens des Benutzers automatisch vonstatten geht. Dies gilt insbesondere für das Einschalten des Systems mit unbekannten Teilnehmern sowie auch hinsichtlich der Veränderung des Systems durch Hinzufügen oder Wegnehmen von einzelnen Geräten. Des Weiteren ist es ein Anliegen der Erfindung, den Datenverkehr auf einem Bussystem so weit zu reduzieren, dass selbst unter Verwendung von Bussystemen mit beschränktem Datendurchsatz ein schneller Signaltransfer sichergestellt ist. Des Weiteren sollen besondere Ereignisse möglichst unverzögert gemeldet werden, die an einer textiltechnischen Maschine zu einer unerwünschten Situation führen oder führen können.

Demgemäß ist es Aufgabe der Erfindung, ein für textiltechnische Geräte in besondere Fadenliefergeräte, Fadenbruchsensoren und dergleichen besonders geeignetes Bussystem anzugeben.

Diese Aufgabe wird mit dem Bussystem nach Anspruch 1 gelöst.

Das erfindungsgemäße Bussystem weist einen Master und mehrere Slaves auf. Der Master kann Teil einer zentralen Steuerungseinheit sein. Es ist auch möglich, als Master ein textiltechnisches oder sonstiges Gerät vorzusehen, das gegenüber anderen textiltechnischen Geräten privilegiert ist und die anderen textiltechnischen Geräte steuert und/oder überwacht.

Das erfindungsgemäße Bussystem weist außerdem wenigstens zwei, vorzugsweise mehrere Slaves auf, die textiltechnische Geräte, wie beispielsweise Fadenliefergeräte, Fadenbruchsensoren oder sonstige Sensoren oder Aktuatoren sind. Die Slaves sind über einen Bus miteinander ringförmig vernetzt. Dieser Bus hat den Vorzug der besonders einfachen Vernetzung der textiltechnischen Geräte. Der Bediener verbindet die einzelnen Teilnehmer bzw. Geräte, die die Slaves bilden, zu einer Kette, indem er jeweils den Ausgang des einen Geräts mit dem Eingang des nachfolgenden Geräts verbindet. Zumindest ein Ende dieser Kette ist mit dem Master verbunden. Werden beide Enden mit dem Master verbunden, ergibt sich ein ringförmig geschlossener Bus. Der Ausgang und der Eingang jedes Geräts sind innerhalb desselben vorzugsweise miteinander verbunden.

Zusätzlich sind die einzelnen Slaves über eine Priority-Line untereinander verbunden. Die Priority-Line erstreckt sich von Slave zu Slave. Die physische Leitungsführung kann somit mit der Leitungsführung des Bus übereinstimmen. Sie kann wie der Bus als Ringleitung ausgebildet werden. Die Priority-Line schließt alle Slaves logisch parallel zueinander an eine weitere Steuerungseinrichtung an. Diese weitere Steuerungseinrichtung kann eine Maschinensteuerungseinrichtung, beispielsweise einer Strickmaschine oder auch der bereits oben genannte Master sein. Die Priority-Line kann bei der Adressierung der Slaves als Daisy-Chain Verknüpfung arbeiten(Staffetten-Priority-Line).

Das erfindungsgemäße Bussystem ist vorzugsweise so aufgebaut, dass es folgende Art der Adressenvergabe nutzen Latenzzeit-Adressierung kann: In dieser Adressierungsart, die als Latenzzeit-Adressierung bezeichnet wird, melden sich alle Slaves individuell zeitversetzt an dem Master an. Die Anmeldungsreihenfolge ergibt sich dabei aus einer Individualadresse des Slaves, die herstellerseitig, beispielsweise in Form einer Seriennummer festgelegt wird. Auf diese Weise wird Kollisionsfreiheit beim Anmeldeprozess auf dem Bus erreicht.

Das erfindungsgemäße Bussystem ist vorzugsweise so aufgebaut, dass es folgende Art der Adressenvergabe nutzen kann: In dieser Betriebsart, die sich als Staffetten-Adressierung bezeichnet werden kann, erfolgt die Adressierung seriell, indem ein Adressierungsbefehl von Slave zu Slave weitergegeben wird. Diese Adressierungsart eignet sich insbesondere für die Adressierung nach Rekonfiguration des Systems, beispielsweise nach dem Entfernen oder Einfügen einzelner Teilnehmer (Slaves).

Das erfindungsgemäße Bussystem ist vorzugsweise so aufgebaut, dass es beide vorgenannten Arten der Adressenvergabe nutzen kann.

Die Adressierung der Slaves beruht vorzugsweise unabhängig von der Art der Adressenvergabe auf logischen Adressen. Diese logischen Adressen sind vorzugsweise kürzer als die Individualadresse. Während die Individualadresse vorzugsweise mehrere, beispielsweise zwölf Bytes lang ist, ist die logische Adresse vorzugsweise lediglich ein Byte lang. Dies ermöglicht einen Adressraum von beispielsweise 128 (7 Bit) oder 256 (8 Bit) Geräten. Für die meisten Anwendungsfälle ist ein Adressraum von 127 logischen Adressen ausreichend, weil der aus den Slaves bzw. Geräten gebildete Bus kaum mehr als 127 Geräte enthält. Der Master führt dabei eine Tabelle, in der er die Individualadressen der Geräte ihren logischen Adressen zuordnet. Außerdem ist in jedem Slave zumindest die logische Adresse wie auch die Individualadresse gespeichert. Vorzugsweise enthalten alle Slaves ebenfalls eine Tabelle, die alle Individualadressen wie auch alle logischen Adressen in paarweiser Zuordnung enthält, jedoch ist dies nicht zwingend.

Nach anfänglicher Initialisierung (Kaltstart) ist eine Kommunikation im Bus möglich, die ausschließlich auf den logischen Adressen beruht. Der Datenverkehr wird deshalb minimiert. Es müssen lediglich ein Byte lange Adressen gesendet werden, um bestimmte Slaves zu einer Aktion aufzurufen. Die Aktion kann beispielsweise in der Abfrage von Messwerten bestehen.

Zur Durchführung einer Latenzzeit-Adressierung werden die einzelnen Slaves beispielsweise durch ein einziges Initialisierungssignal aufgefordert, ihre Individualadresse zu senden, die auch als UI-Adresse (Unique Identifier Address) bezeichnet wird. Dabei enthalten alle Slaves vorzugsweise einen Timer oder eine äquivalent arbeitende Baugruppe, beispielsweise in Form eines Mikrorechners, der anhand der Individualadresse (Unique Identifier Address) eine Verzögerungszeit bestimmt. Wenn alle Individualadressen, wie oben vorausgesetzt, herstellerbedingt unterschiedlich sind, kann jeder Slave einen individuellen Sendezeitpunkt finden, der sich von den Sendezeitpunkten der anderen Slaves unterscheidet. So wird Kollisionsfreiheit auf dem Bus garantiert bzw. ermöglicht. Zur Herbeiführung der Kollisionsfreiheit können die Slaves eine Latenzzeit wählen, die von der Individualadresse eindeutig abhängt. Beispielsweise kann die Latenzzeit bei einer 8 Byte langen Individualadresse ermittelt werden, indem Modulo 1024 der Individualadresse bestimmt wird. Dies ist der Divisionsrest, der sich bei Division der Individualadresse durch 64 ergibt. Wird dieser Divisionsrest beispielsweise mit der durchschnittlichen Sendezeit oder einem darüber liegenden Zeitabschnitt, beispielsweise 10 ms, multipliziert kann das erhaltene Rechenergebnis als Latenzzeit genommen werden. Jeder Slave lässt die so individuell bestimmte Latenzzeit verstreichen, bis er seine Individualadresse sendet. Die anderen Slaves sind in dieser Betriebsart transparent, d.h. sie leiten empfangene Daten sofort weiter, so dass diese sehr schnell am Master ankommen. Der Master notiert dabei die Reihenfolge des Eintreffens der gesendeten Individualadressen und speichert diese zusammen mit der Nummer ihres Eintreffens ab. So entsteht eine Zuordnung zwischen logischer Adresse und Individualadresse. Die logische Adresse entspricht der Nummer des Eintreffens der entsprechenden Individualadresse am Master.

Wie der Master können auch die einzelnen Slaves entsprechende Tabellen erstellen, um eine Übersicht über die logischen Adressen zu erlangen. Der Master kann zur Bestätigung der Adressierung die logische Adresse des zuletzt adressierten Slaves über den Bus an alle Slaves ausgeben, so dass auch diese eine entsprechende Tabelle anlegen können und der einzelne Slave, der zuletzt angesprochen hat, seine logische Nummer kennen lernt, falls er sie nicht errechnen konnte.

An Stelle der Modulo-Division, die in seltenen Fällen zu Adresskonflikten führen könnte, können auch andere Berechnungsarten gewählt werden, die aus der mehreren Bytes langen Individualadresse einen eindeutigen Sendezeitpunkt bestimmen.

Als Staffenten-Adressierung ist ein Boot-Prozess möglich, bei dem der Master eine Abfragesequenz startet. Diese beginnt mit einem Initialisierungskommando des Masters. Der in dem Bus anzutreffende erste Slave antwortet mit einer bestimmten Adresse, beispielsweise 0x001 als Positionsadresse und sendet seine Individualadresse über den Bus an den Master zurück. Diese speichert die Individualadresse zusammen mit der logischen Adresse (z.B. wie eben angegeben 0x001) ab. Das Initialisierungssignal wird von dem ersten Slave an den zweiten weiter gegeben. Dieser inkrementiert die Positionsadresse und gibt diese zusammen mit seiner Individualadresse über den Bus an den Master weiter. Dieser speichert auch diese Wertepaar bestehend aus logischer Adresse (0x002) und Individualadresse ab. So geht der Vorgang weiter bis alle Slaves adressiert sind, wobei die von dem sich gerade adressierenden Slave gesendeten Adressen (logische Adresse und Individualadresse) jeweils transparent d.h. ohne Veränderung von Slave zu Slave weiter gegeben werden bis sie den Master erreichen.

Abschließend hat der Master die Anzahl der Slaves und deren Individualadressen erhalten und in einem Inventar in der korrekten Reihenfolge abgespeichert. Danach spricht der Master jeden Slave nur noch mit der logischen Adresse an, die der Positionsadresse entspricht. Das Verkehrsaufkommen auf dem Bus wird somit wesentlich reduziert.

Bei der oben beschriebenen Staffetten-Adressierung kann an Stelle einer fortwährenden Inkrementierung der logischen Adressen von Slave zu Slave auch eine Dekrementierung erfolgen. Es ist des Weiteren möglich, mit einer von 0x001 verschiedenen Startadresse zu beginnen. Außerdem können an Stelle der Inkrementierung oder Dekrementierung sonstige eindeutige Adressveränderungen vorgenommen werden, bei der jede Adresse des Adressraums lediglich ein einziges Mal auftritt. Die Inkrementierung oder Dekrementierung der logischen Adresse oder deren sonstige Veränderung kann sowohl in dem sendenden Slave als auch in dem nachfolgenden empfangenden Slave erfolgen.

Der Master kann auch eine Überprüfung der Adressierung aller Slaves vornehmen. Beispielsweise wird bei Betriebsstart und vorhandener logischer Adressierung von jedem Slave zunächst seine UI-Adresse in Verbindung mit seiner logischen Adresse gesendet. Die Sendung kann in der Reihenfolge der vorhandenen logischen Adressierung erfolgen. Stimmen die von den Slaves gesendeten logischen Adressen und Individualadressen mit dem Inventar des Masters überein, kann das System unmittelbar seinen weiteren Betrieb aufnehmen. Ist ein noch nicht vorhandener Slave vorhanden, kann dieser keine Adresse senden. Er kann somit wie bei einer Staffetten-Adressierung seinen Sendezeitpunkt durch eine Latenzzeit bestimmen. In diesem Fall stellt der Master fest, dass einer der Slaves unerwartet sendet und eine neue Vergabe logischer Adressen auslösen, indem er eine der oben beschriebenen Initialisierungsprozeduren beginnt. Ist die Anzahl der Slaves sowie deren Reihenfolge jedoch zeitlich korrekt, unternimmt er keine weitere Aktion sondern er kann zum Normalbetrieb übergehen.

Das System stellt eine Kombination aus einem Bus mit einer Priority-Line dar. Über Letztere können alle Slaves gleichberechtigt und zeitlich unverzögert ein Signal an den Master senden. Dies beispielsweise zur Anzeige eines Fadenbruchs. Beispielsweise ist die Priority-Line im Ruhezustand in einem ersten physikalischen Zustand, beispielsweise auf High Potential. Jeder der Slaves kann die Leitung nun zur Signalisierung eines bestimmten Zustands, beispielsweise eines Fehlers, auf ein anderes Potential, beispielsweise Low Potential ziehen. Dies kann von einer an die Priority-Line angeschlossenen Steuerung zur Auslösung weiterer Aktionen, wie beispielsweise dem Abschalten einer Strickmaschine genutzt werden. Über den Bus kann der aktivierte Slave weitere Informationen an den Master senden, beispielsweise seine logische Adresse angeben, um anzuzeigen, welcher der Slaves das Signal an die Priority-Line gegeben hat. An Stelle zweier verschiedener Potentiale (High Potential und Low Potential) können auch andere physikalische Größen, wie beispielsweise der Stromfluss in der Priority-Line, genutzt werden. Beispielsweise ist die Priority-Line in einem ersten Zustand stromlos während sie in einem zweiten Zustand stromführend ist.

Die Priority-Line ist zugleich eine Staffette-Line. Sie erreicht jeden Slave an seinem jeweiligen Eingang und verlässt ihn an seinem Ausgang. Zwischen Eingang und Ausgang ist ein Schalter angeordnet, der in Normalbetrieb nach dem Adressieren geschlossen ist. Die Staffette-Priority-Line dient in diesem Zustand zur schnellen (unverzögerten) Weitergabe von wichtiger Information (z.B. Fadenbruch) an den Master und wird somit zur Priority-Line. Bei der Staffentten-Adressierung Bei der Staffetten-Adressierung sind die Schalter zwischen den Eingängen und dem Ausgang offen und werden einer nach dem anderen geschlossen. So wird die Adressierungsaufforderung in einer Staffette von Slave zu Slave weitergegeben. Die Staffette/Priority-Line hat somit eine Doppelfunktion.

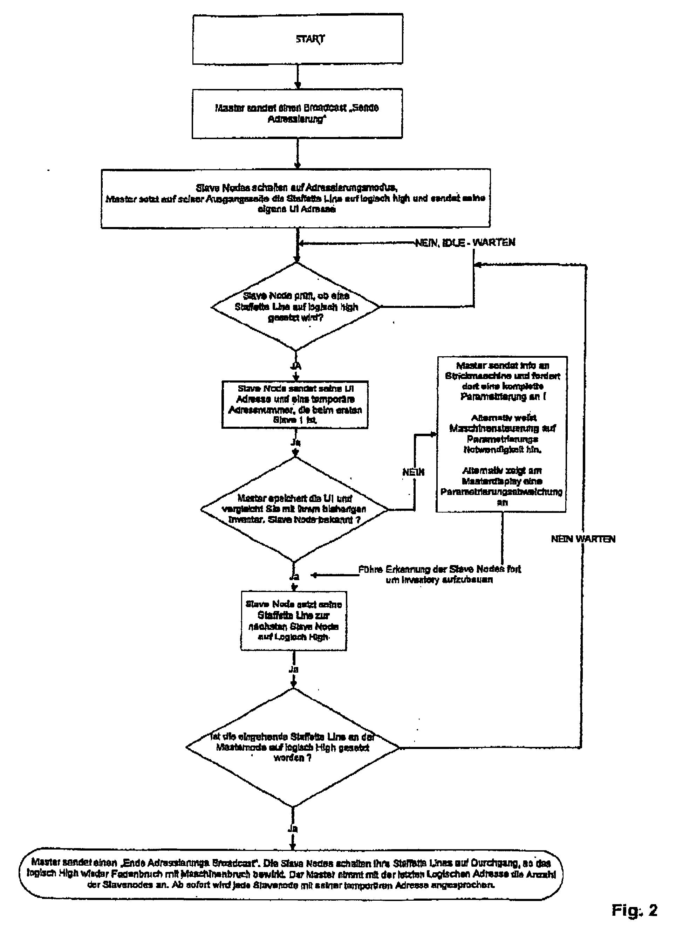

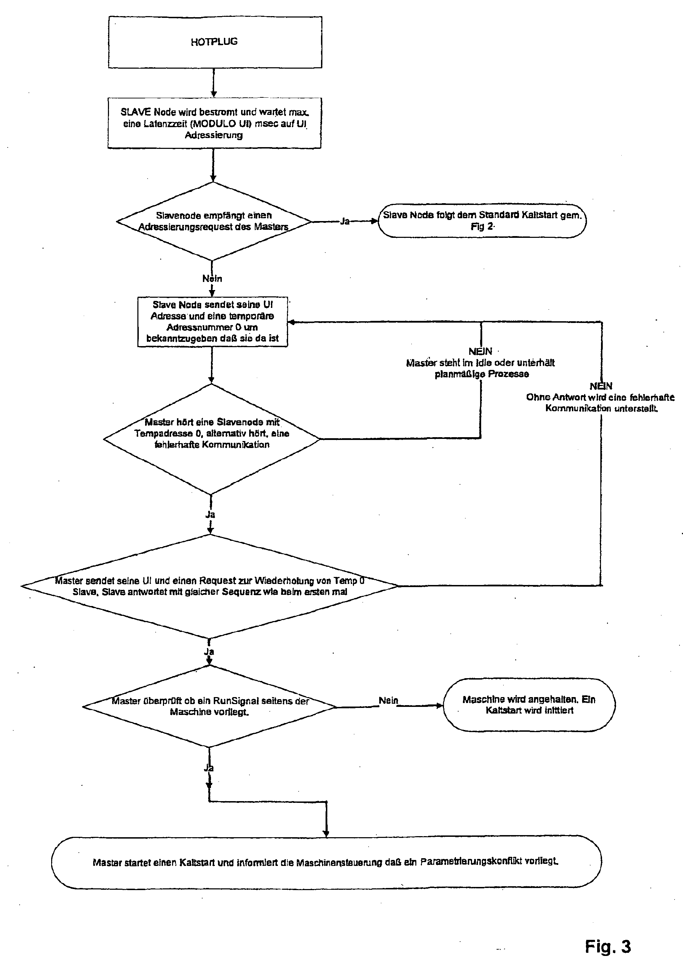

Weitere Einzelheiten vorteilhafter Ausführungsformen der Erfindung ergeben sich aus der Zeichnung, der Beschreibung oder Ansprüchen. Die Zeichnung umfasst dabei eine einzige Figur, in der die logische Struktur des Bussystems veranschaulicht ist. Die Zeichnung beschränkt sich auf Wiedergabe einiger wesentlicher Aspekte der Erfindung und sonstiger Gegebenheiten. Nicht beschriebene Details kann der Fachmann in gewohnter Weise der Zeichnung entnehmen. In der Beschreibung und der Zeichnung werden die Begriffe "Master" und "Master node" synonym für eine als Master arbeitende Einrichtung, deren Teile, Programme, Programmmodule oder auch Geräte verwendet. In der Beschreibung und der Zeichnung werden die Begriffe "Slave" und "Slave node" synonym für eine als Slave arbeitende Einrichtung, deren Teile Programme, Programmmodule oder auch Geräte verwendet. Es zeigen:

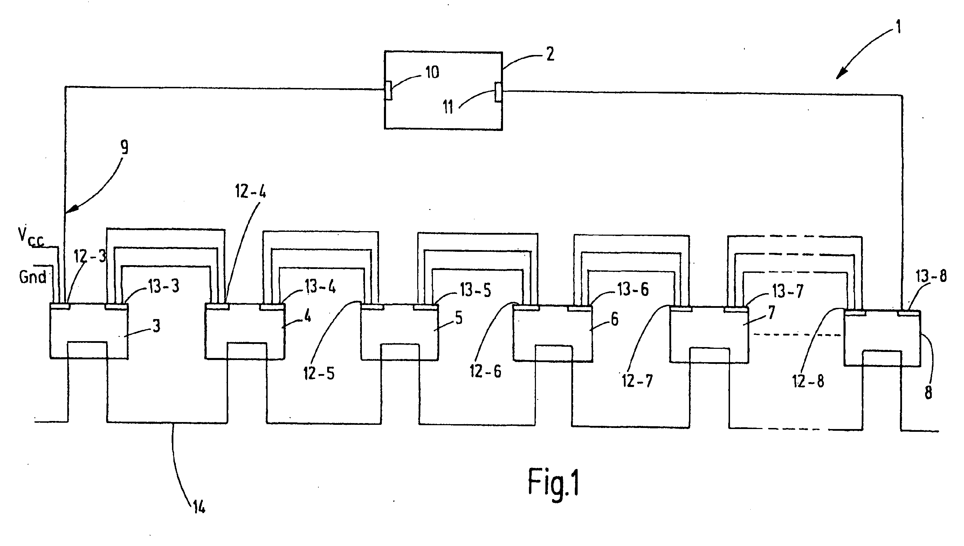

Figur 1 ein erfindungsgemäßes Bussystem in schematischer Prinzipdarstellung,
Staffetten-Adressierung Figur 2 eine Staffetten-Adressierung als Ablaufplan und
Prozedur Figur 3 eine Prozedur (Hotplug) als Ablaufplan.

In der Figur ist ein System bestehend aus textiltechnischen Geräten schematisch veranschaulicht, die ein Bussystem 1 bilden. Zu dem Bussystem 1 gehört außerdem ein Master 2, der beispielsweise zu einer Zentralsteuerung gehört oder durch eine solche gebildet ist. Der Master kommuniziert mit entsprechenden elektronischen Einheiten der textiltechnischen Geräte. Diese Einheiten werden als Slaves 3, 4, 5, 6, 7, 8 bezeichnet. Umfasst der Adressraum zur logischen Adressierung der Slaves 3 bis 8 bzw. 8 Bit, können insgesamt bis zu 127 Slaves vorhanden sein.

Die Slaves 3 bis 8 sind mit dem Master 2 über einen Bus 9 verbunden, der z.B. ein gängiger Zweidrahtbus mit Leitungen Rₓ, Tₓ ist. Zu diesem gehört zumindest eine Leitung, die von einem Anschluss 10 des Masters 2 ausgeht und mit den Slaves 3 bis 8 eine Kette bildet. Das dem Anschluss 10 ferne Ende dieser Kette kann an einen weiteren Anschluss 11 des Masters 2 angeschlossen sein, so dass dann ein geschlossener Ring entsteht. In diesem Fall ist der Anschluss 10 bspw. ein Ausgang und der Anschluss 11 z.B. ein Eingang.

Jeder Slave 3 weist einen entsprechenden Eingang 12 sowie einen Ausgang 13 auf, der beispielsweise in Form eines Steckverbinders realisiert sein kann. In der Figur sind die Eingänge 12 und Ausgänge 13 der entsprechenden Slaves 3 bis 8 jeweils mit der Slavenummer verbunden, um eine Unterscheidung zu ermöglichen (12-3, 13-3 bis 12-8, 13-8) . Außerdem enthalten die entsprechenden Steckverbinder Kontakte für ein Betriebsspannungspotential V_{cc} sowie Masse (Gnd). Intern besteht in jedem Slave 3 bis 8 normalerweise eine Verbindung zwischen dem Eingang 12 und dem Ausgang 13. Damit werden die Betriebsspannung V_{cc} und das Massepotential Gnd permanent an alle Slaves 3 bis 8 angelegt. Normalerweise sind die Slaves 3 bis 8 in einem Transparentmodus. In diesem ist die Leitung 9 jeweils vom Eingang 12 zum Ausgang 13 durchverbunden. Ein von dem Master 2 an seinem Ausgang 10 gesendetes Signal kommt somit mit ganz geringer Laufzeitverzögerung an seinem Eingang 11 wieder an. Die Slaves 3 bis 8 können den Signalpfad der Leitung 9 von dem Eingang 12 zum Ausgang 13 jedoch auftrennen, wenn sie dazu veranlasst werden. Dies werden sie indem der Master 2 auf dem Bus 9 eine logische Adresse sendet, die der logischen Adresse des angesprochenen Slaves entspricht. In diesem Fall kann der betreffende Slave aktiviert werden, um einen bestimmten Befehl auszuführen. Der Befehl kann über den Bus 9 an den betreffenden Slave geleitet werden. Ist dies beispielsweise die Abfrage eines Messwerts, kann der angesprochene Slave die Leitungsverbindung zwischen Eingang 12 und Ausgang 13 auftrennen und an seinem Ausgang 13 das entsprechende Signal senden. Die nachfolgenden Slaves sind transparent und leiten das Signal nahezu unverzögert an den Master 2 weiter.

Alle Slaves 3 bis 8 sind in normalem Betriebsmodus passiv. In passivem Zustand sind Eingang 12 und Ausgang 13 miteinander verbunden. Signale werden unmittelbar vom Eingang 12 an den Ausgang 13 übertragen, d.h. die Slaves 3 bis 8 sind hinsichtlich der Signalübertragung transparent.

Die Slaves 3 bis 8 sind beispielsweise Fadenbruchsensoren, Fadenspannungssensoren, Fadenliefergeräte oder dergleichen oder von diesen Sensoren oder Geräten enthaltene elektronische Baugruppen. Sie sind mit einer Staffette-Priority-Line 14 verbunden. Die Staffette-Priority-Line 14 kann vorzugsweise wenigstens zwei Zustände, z.B. zwei verschiedene logische Zustände einnehmen. Der erste Zustand kann eine logische 1 und der zweite Zustand eine logische 0 sein. Diese logischen Zustände können durch Spannungen oder Ströme repräsentiert werden. Beispielsweise ist die logische 1 durch ein High Potentiallauf der Staffette-Priority-Line 14 repräsentiert. Jeder der Slaves 3 bis 8 hat nun die Möglichkeit, den logischen Zustand der Staffette-Priority-Line 14 zu ändern, beispielsweise indem er das Potential der Leitung 14 von High Potential (Logisch 1) auf Low Potential (Logisch 0) zieht. In diesem Sinne sind die Slaves 3 bis 8 hinsichtlich der Signalisierung eines Zustands an eine angeschlossene Einheit miteinander oder-verknüpft. Die Oderverknüpfung kann beispielsweise erreicht werden, indem die Slaves 3 bis 8 zum Anschluss an die Staffette-Priority-Line 14 jeweils einen Open-Kollektorausgang aufweisen. Liegt die Staffette-Priority-Line 14 über einem Vorwiderstand an Betriebsspannung, führt sie normalerweise High Potential. Wenn auch nur einer der Slaves 3 bis 8 anspricht, wird sein Ausgangstransistor leitend und der Open-kollektorausgang zieht die Staffette-Priority-Line 14 auf Massepotential (GND).

Die Staffette-Priority-Line 14 kann an eine gesonderte Einheit oder an den Master 2 angeschlossen sein und der Signalisierung von Fehlern dienen. Auf diese Weise können eilige Meldungen unverzögert weitergegeben werden. Dies ist unabhängig von dem sonstigen Datenverkehr auf dem Bus 9 möglich.

Das insoweit beschriebene Bussystem 1 arbeitet wie folgt:
Es wird zunächst davon ausgegangen, dass der Master 2 und die Slaves 3 bis 8 erstmalig elektrisch miteinander verbunden werden. Die Slaves 3 bis 8 verfügen noch nicht über logische Adressen. Um den Bediener nun einerseits eine besonders einfache Systemkonfiguration zu ermöglichen und andererseits den späteren Datenverkehr auf dem Bus 9 auf ein geringes Maß zu beschränken, erhalten die Slaves 3 bis 8 logische Adressen. Zur Vergabe derselben dient eine Kaltstartroutine. Diese beruht auf Individualadressen der Slaves 3 bis 8. Diese stammen aus der Produktion eines Herstellers, der jedem Slave eine Individualadresse gibt. Diese Individualadresse wird lediglich einmalig vergeben. Dies bedeutet, dass jedes von dem Hersteller produzierte Gerät und somit jeder Slave eine Individualadresse aufweist, die kein zweites Mal vergeben wird. Beispielsweise besteht sie aus 12 Bytes (12 mal 8 Bit). Diese Individualadresse wird jedoch nicht zur späteren Adressierung innerhalb des Busses 9 verwendet. Denn die Übertragung von 12 Bytes zur Adressierung eines Slaves erfordert zu große Übertragungszeiten. Vielmehr wird eine Initialisierungsroutine abgearbeitet, in der jedem Slave 3 bis 8 auf Basis seiner Individualadresse eine logische Adresse zugeordnet wird. Dazu sendet der Master 2 über den Bus 9 zunächst einen Adressierungsaufruf (Initialisierungssignal) an alle Slaves 3 bis 8. Dieser Adressierungsaufruf wird wegen der Transparenz der einzelnen Slaves 3 bis 8 fast zeitgleich an alle Slaves 3 bis 8 übertragen. Jeder Slave beginnt nun einen geeigneten Sendezeitpunkt für seine Initialisierung zu ermitteln. Diesen Sendezeitpunkt berechnet er aufgrund seiner Individualadresse. Beispielsweise bildet er den Modulo-1024-Wert der Individualadresse und multipliziert das Ergebnis mit einem gegebenen Zeitwert von z.B. 10 Millisekunden. Das erhaltene Produkt stellt eine Latenzzeit dar, die der betroffene Slave 3 bis 8 abwartet, bis er sendet. Außerhalb seiner eigenen Sendezeit ist der betreffende Slave 3 bis 8 transparent. Somit senden die einzelnen Slaves 3 bis 8 zu unterschiedlichen Zeitpunkten und leiten die Signale der anderen Slaves jeweils ungehindert und im Wesentlichen unverzögert von ihrem Eingang 12 zu ihrem Ausgang 13 weiter. Die einzelnen Sendesignale treffen in dem Master 2 nacheinander ein. Sie werden in der Reihenfolge ihres Eintreffens durchnumeriert. Die Slaves 3 bis 8 senden zur Adressierung jeweils ihre Individualadresse. Die entsprechend an dem Eingang 11 des Masters 2 eintreffenden Individualadressen werden zusammen mit der Nummer, mit der sie eintreffen abgespeichert. Auf diese Weise erstellt der Master 2 eine Zuordnungstabelle bestehend aus einander paarweise zugeordneten logischen Adressen und Individualadressen. Diese Zuordnungstabelle kann über den Bus 9 an alle Slaves 3 bis 8 weitergegeben werden, so dass auch diese eine entsprechende Kopie der Zuordnungstabelle abspeichern.

Nachfolgend werden die einzelnen Slaves 3 bis 8 von dem Master 2 nicht mehr anhand ihrer Individualadressen, sondern lediglich noch anhand ihrer logischen Adressen angesprochen. Diese sind lediglich 1 Byte lang, so dass der Datenverkehr auf dem Bus 9 wesentlich reduziert ist.

Es ist auch möglich, eine Initialisierung nach einem Abzählverfahren (Staffette) vorzunehmen, wie es in Figur 2 veranschaulicht ist. Dabei sendet der Master 2 eine Anfangsadresse (z.B. 0x001) verbunden mit einem Initialisierungsbefehl an den physisch ersten Slave 3. Weil dieser zunächst noch transparent ist, erhalten auch alle anderen Slaves 4 bis 8 den Initialisierungsbefehl. Alle Slaves 3 bis 8 öffnen nun die Verbindung zwischen Eingang 12 und Ausgang 13. Sie öffnen auch die in Figur 1 veranschaulichte Leitungsverbindung in der Staffette-Priority-Line 14. Diese wird dadurch zu einer Staffette-Line. Der erste Slave 3 empfängt nun eine Anfangsadresse, z.B. 0x001. Er eignet sich diese Adresse an, schließt die Verbindung in der Staffette-Priority-Line 14 sowie zwischen Eingang 12-3 und Ausgang 12-3 und gibt seine Adresse oder eine inkrementierte Adresse an den nachfolgenden Slave 4 weiter. Dieser eignet sich die inkrementierte Adresse an, schließt die Verbindung zwischen seinem Eingang 12-4 und seinem Ausgang 13-4 inkrementiert die Adresse und sendet sie an den nachfolgenden Slave 5 weiter. So setzt sich der Vorgang fort, bis alle Slaves 3 bis 8 adressiert sind. Alternativ kann die Inkrementierung jeweils auch im empfangenden Slave erfolgen.

Sind die Slaves 3 bis 8 adressiert, gehen sie wiederum in den normalen Betrieb über, indem sie nur noch aufgrund ihrer logischen Adressen angesprochen werden. Keiner der Slaves 3 bis 8 sendet unaufgefordert ein Signal. Jedoch kann der Master 2 jeden Slave 3 bis 8 individuell ansprechen und zur Sendung beispielsweise von Messwerten auffordern.

Stellt einer der Slaves 3 bis 8 einen unzulässigen Zustand, beispielsweise einen Fadenbruch fest, aktiviert er die Staffette-Priority-Line 14. Dieses Signal kommt unverzögert am Empfänger, beispielsweise dem Master 2 oder einer anderen Steuereinheit an. Der Master 2 kann daraufhin ein Anforderungssignal über den Bus 9 senden, mit der er den Slave, der angesprochen hat, auffordert, sich zu melden. Dieses Signal empfangen alle Slaves 3 bis 8. Hat beispielsweise der Slave 5 angesprochen, sendet dieser seine logische Adresse. Außerdem kann er weitere Informationen, beispielsweise über die Art des Fehlers senden. Alternativ kann die Sendung über die Auslösung der Staffette-Priority-Line 14 auch unaufgefordert jeweils dann erfolgen, wenn einer der Slaves 3 bis 8 über die Staffette-Priority-Line 14 ein Signal abgegeben hat.

Mit dem vorgestellten Bussystem lässt sich einerseits eine besonders einfache Adressierung der einzelnen Geräte eines textiltechnischen Systems realisieren. Es lässt sich ein Bus verwenden, der hinsichtlich der Konfiguration und Rekonfiguration auch hardwaretechnisch besonders flexibel ist. Die Lösung kann auf kabel- oder drahtloser Übertragung beruhen. Zur Reduktion des Datenverkehrs werden den einzelnen Slaves 3 bis 8 des Bus logische Adressen vergeben, die kurz sind (beispielsweise nur 1 Byte lang). Zur schnellen hoch priorisierten Signalisierung von Zuständen, beispielsweise Fehlerzuständen, dient eine Staffette-Priority-Line 14, an die alle Slaves 3 bis 8 gleichberechtigt angeschlossen sind. Die Priority-Line 14 kann als Abstellleitung genutzt werden.

**Bezugszeichenliste**

| | |
|---|---|
| 1 | Bussystem |
| 2 | Master |
| 3-8 | Slaves |
| 9 | Bus |
| 10 | Ausgang |
| 11 | Eingang |
| 12 | Eingang |
| 13 | Ausgang |
| 14 | Staffette-Priority-Line |

## Patentansprüche

1. Bussystem (1) zur Vernetzung von textiltechnischen Geräten mit einer Zentralsteuerung
mit einem Master (2), und
mit mehreren Slaves (3-8),
die über einen Bus (9) miteinander vernetzt sind und **dadurch gekennzeichnet** ist, daβ die
Slaves (3-8) zusätzlich an eine Priority-Line (14) angeschlossen sind, die eine Staffette-Line ist,
wobei die Staffette-Priority-Line (14) se ausgebildet ist, daβ sie eine Doppelfunktion hat, nämlich bei einer Staffetten-Adressierung die Weitergabe einer Adressierungsaufforderung in einer Staffette von Slave zu Slave und im Normalbetrieb die unverzögerte Signalisierung eines bestimmten Zustands.

2. Bussystem nach Anspruch 1, **dadurch gekennzeichnet, dass** zur Staffetten-Adressierung in der Staffette-Priority-Line (14) Schalter zwischen den Eingängen und Ausgängen der Slaves vorgesehen sind, wobei beim Start der Staffetten-Adressierung die Schalter offen sind und zur Weitergabe der Adressierungsaufforderung einer nach dem anderen geschlossen werden.

3. Bussystem nach Anspruch 1, **dadurch gekennzeichnet, dass** jeder Slave (3-8) eine vom Hersteller vorgegebene mehrere Bytes lange Individualadresse aufweist.

4. Bussystem nach Anspruch 1, **dadurch gekennzeichnet, dass** jedem Slave in dem Bussystem (2) eine logische Adresse zugeordnet wird, die kürzer als die Individualadresse ist.

5. Bussystem nach Anspruch 1, **dadurch gekennzeichnet, dass** alle Slaves (3-8) passiv sind und nur auf Aufforderung durch den Master (2) Information über den Bus (9) senden.

6. Bussystem nach Anspruch 1, **dadurch gekennzeichnet, dass** jeder Slave nach Zuordnung einer logisahen Adresse dauerhaft in einem Transparentmodus bleibt, in dem er, sofern er keine Sendeaufforderung erhält, alle über den Bus (9) erhaltenen Signale über den Bus (9) weiterleitet.

7. Bussystem nach Anspruch 1, **dadurch gekennzeichnet**, daas die Staffette-Priority-Line (14) dem Master (2) im Normal betrib von in einem ersten Zustand gehalten wird.

8. Bussystem nach Anspruch 1, **dadurch gekennzeichnet, dass** der Zustand der Staffette-Priority-Line (14) durch jeden Slave (3-8) gleichberechtigt veränderbar ist.

9. Bussystem nach Anspruch 1, **dadurch gekennzeichnet, dass** jeder Slave (3-8) wenn er den bestimmten Zustand feststellt, den Zustand der Staffette-Priority-Line (14) ändert und über den Bus (9) zusätzliche Information sendet.

## Claims

1. Bus system (1) for linking technical textile devices to a central controller
with a master (2), and
with a plurality of slaves (3 to 8),
which are linked to one another by a bus (9), and is **characterised in that** the slaves (3 to 8) are additionally connected to a priority line (14), which is a relay line,
wherein the relay priority line (14) is configured in such a way that it has a double function, namely, during a relay addressing, forwarding an addressing request in a relay from slave to slave and, during normal operation, the instantaneous signalling of a specific state.

2. Bus system according to claim 1, **characterised in that** switches are provided between the inputs and outputs of the slaves for relay addressing in the relay priority line (14), the switches being open at the start of the relay addressing and being closed one after the other to forward the addressing request.

3. Bus system according to claim 1, **characterised in that** each slave (3 to 8) has an individual address which is several bytes long and predetermined by the producer.

4. Bus system according to claim 1, **characterised in that** a logical address, which is shorter than the individual address, is assigned to each slave in the bus system (2).

5. Bus system according to claim 1, **characterised in that** all the slaves (3 to 8) are passive and only send information via the bus (9) upon a request by the master (2).

6. Bus system according to claim 1, **characterised in that** each slave, after the assignment of a logical address, remains permanently in a transparent mode, in which, as long as it does not receive a sending request, it forwards, via the bus (9), all the signals received via the bus (9).

7. Bus system according to claim 1, **characterised in that** the relay priority line (14) is kept in a first state by the master (2) during normal operation.

8. Bus system according to claim 1, **characterised in that** the state of the relay priority line (14) can be varied with equal access by every slave (3 to 8).

9. Bus system according to claim 1, **characterised in that** each slave (3 to 8), when it detects the specific state, changes the state of the relay priority line (14) and sends additional information via the bus (9).

## Revendications

1. Système de bus (1) pour la mise en réseau de dispositifs techniques textiles avec une commande centrale
avec un maître (2), et
avec plusieurs esclaves (3-8),
qui sont mis en réseau mutuellement via un bus (9) et
**caractérisé en ce que** les esclaves (3-8) sont en outre connectés à une ligne prioritaire (14) qui est une ligne relais,
la ligne relais-prioritaire (14) étant configurée de manière à avoir une double fonction, à savoir, pour un adressage relais, la transmission d'une demande d'adressage dans un relais d'esclave à esclave et, en régime normal, la signalisation sans retard d'un état déterminé.

2. Système de bus selon la revendication 1, **caractérisé en ce que** pour l'adressage relais dans la ligne relais-prioritaire (14), des commutateurs sont prévus entre les entrées et les sorties des esclaves, les commutateurs étant ouverts lors du lancement de l'adressage relais et fermés l'un après l'autre pour la transmission de la demande d'adressage.

3. Système de bus selon la revendication 1, **caractérisé en ce que** chaque esclave (3-8) présente une adresse individuelle longue de plusieurs octets prescrite par le constructeur.

4. Système de bus selon la revendication 1, **caractérisé en ce qu'**une adresse logique, qui est plus courte que l'adresse individuelle, est affectée à chaque esclave du système de bus (2).

5. Système de bus selon la revendication 1, **caractérisé en ce que** tous les esclaves (3-8) sont passifs et n'émettent l'information via le bus (9) que sur la demande du maître (2).

6. Système de bus selon la revendication 1, **caractérisé en ce que** chaque esclave, après l'affectation d'une adresse logique, reste durablement dans un mode transparent dans lequel, s'il ne reçoit pas de demande d'émission, il transfère via le bus (9) tous les signaux obtenus via le bus (9).

7. Système de bus selon la revendication 1, **caractérisé en ce que** la ligne relais-prioritaire (14) est maintenue en régime normal dans un premier état par le maître (2).

8. Système de bus selon la revendication 1, **caractérisé en ce que** l'état de la ligne relais-prioritaire (14) est modifiable avec les mêmes droits par chaque esclave (3-8).

9. Système de bus selon la revendication 1, **caractérisé en ce que** chaque esclave (3-8), lorsqu'il constate l'état déterminé, modifie l'état de la ligne relais-prioritaire (14) et émet une information supplémentaire via le bus (9).
